# EUROPÄISCHE PATENTSCHRIFT

(11) **EP 2 168 684 B1**
(45) Veröffentlichungstag und Bekanntmachung des Hinweises auf die Patenterteilung: **05.09.2012**
(21) Anmeldenummer: 09015626.6
(22) Anmeldetag: 04.07.2006
(51) Int. Cl.: B01L 9/00, B01L 3/00, B01L 9/06, G01N 35/02, C12M 1/00

(54) **Modulares Aufbewahrungsssystem für Labor-Flüssigkeiten**
Modular storage system for laboratory fluids
Système de conservation modulaire pour liquides de laboratoire

(43) Veröffentlichungstag der Anmeldung: 31.03.2010
(62) Teilanmeldung aus: 06754664.8
(73) Patentinhaber: EPPENDORF AG, 22339 Hamburg (DE)
(72) Erfinder: Harnack, Kurt, 22889 Tangstedt (DE); Knofe, Helmut W., 22844 Norderstedt (DE); Kroog, Jens-Peter, 22927 Großhansdorf (DE); Scheffler, Peter, 22399 Hamburg (DE)
(74) Vertreter: Rohnke, Christian

(56) Entgegenhaltungen:
- WO-A-03/100389
- DE-A1- 10 203 940
- DE-A1- 10 333 545
- US-A- 5 672 317
- US-B1- 6 669 910

## Beschreibung

Die vorliegende Erfindung betrifft ein modulares Aufbewahrungssystem für Labor-Flüssigkeiten.

Bisher bekannte Systeme zur Aufbewahrung von Proben sind primär an bestimmte Analysengeräte mit der Aufgabenstellung eines möglichst hohen Probendurchsatzes angepasst. Sie sind besonders im Bereich von klinischen Analysengeräten bekannt. Hier wird die Aufgabe gelöst, eine möglichst hohe Zahl von Proben aufzunehmen, zu lagern, zu verwalten und für Analysezwecke bereit zu halten. Entsprechend komplex sind diese Systeme konstruiert. Insbesondere ist bei diesen Systemen die Integration in komplexe, möglichst schnell ablaufende Analyseschritte kontaminationsfrei zu lösen. Auch steht die Notwendigkeit im Vordergrund, eine Verdunstung möglicherweise sehr teurer Reagenzien durch die Versiegelung der Reaktionsgefäße zu vermeiden.

Entsprechende Ausführungsformen findet man zum Beispiel bei US 4,933,146. Hier werden identisch gestaltete versiegelte Küvetten in einer ringförmigen Anordnung unter Präsenz einer aktiven Heiz- und Kühleinrichtung als Bestandteil einer Mechanik für die Erkennung von Signalen verwendet.

Ähnlich ist die Aufgabenstellung in EP 0651254A1 gelöst. Der für ein klinisches Analysegerät erforderliche individuelle Reagenzienkit wird in einem kühlbaren Container in einer linearen Anordnung auf ein mit Peletier-Elementen ausgestattetes Kühlsystem gebracht.

Eine andere Aufgabenstellung aus dem medizinischen Bereich wird in US 2006/0012773A1 gelöst. Gemäß dieser Erfindung werden in einem Array von identischen Gefäßen biologische Objekte aus der Laser-Mikrodissektion verwahrt.

Um den klinischen Anforderungen an die Identifizierbarkeit von Proben gerecht zu werden, sind besonders bei klinischen Analysegeräten Mittel zur Erkennung von Proben, wie zum Beispiel Barcode- oder mechanische Abtastsysteme berücksichtigt, wie zum Beispiel in US 6,432,359 B1 oder in US 5,672,317. In besonderen Ausführungsformen wird sogar die gesamte Produktinformation in einem Probensystem berücksichtigt (US 5,589,137).

Neueren Datums sind Vorrichtungen für den automatisierten Hochdurchsatz wie zum Beispiel DE 10333545A1. Hier werden möglicht viele Proben für die gleiche Aufgabenstellung in identischen Gefäßen in einem Kassettensystem aus drei Stufen angeordnet und bestückt.

Eine andere Ausführungsform findet man in US 5,788,929. Hier stehen Transport und Aufbereitung von mobilen Proben im Vordergrund, wobei die Probe ungeregelt unter der Umgebungstemperatur gehalten werden soll.

In anderen Fällen wie zum Beispiel in US 6,156,275 oder in PCT WO 00/45953 ist die Aufnahmemechanik für Gefäße aus Automationsgründen sehr komplex gelöst.

Es handelt sich bei den geschilderten Anwendungen primär um technisch aufwendige Lösungen, meist identische Typen von Proben analysegerecht langzeitlich zu verwahren, temporär einem Analyseautomaten zur Verfügung zu stellen und in ihre Ausgangsposition zurückzuführen. Die Systematik der Lagerhaltung von Flüssigkeiten erfordert hierbei den gleichen Typ von Gefäßen.

Im allgemeinen Laborbereich dagegen stehen andere Ziele im Vordergrund. Moderne Workstations dienen dem programmierten Flüssigkeitshandling im Labor, und sie sind platzsparend ausgelegt. Sie zielen nicht auf Routineaufgabenstellungen wie zum Beispiel Lagerhaltung, klinische Analysen und/oder Hochdurchsatz ab. Dieses andere Aufgabensegment erfordert eine ständig wechselnde Bestückung mit Arbeitsmodulen wie zum Beispiel für Liquid-Handling-Stationen, Vakuumkammern, Thermal Cycler für die PCR (*Polymerase Chain Reaction),* Zentrifugen, Array Spotter oder andere Instrumente.

Der Erfindung liegt die Aufgabenstellung zugrunde, für eine ständig wechselnde Arbeitsumgebung ein Aufbewahrungssystem für Flüssigkeiten oder andere Stoffe zu schaffen, welches flexibel, platzsparend, kostengünstig, vorzugsweise temperierbar, portabel und für eine Vielzahl unterschiedlicher Typen von Gefäßen und anderen Behältern geeignet ist.

Diese Aufgabe wird erfindungsgemäß von einem modularen Aufbewahrungssystem mit den Merkmalen des Anspruchs 1 gelöst. Bevorzugte Ausgestaltungen sind in den Unteransprüchen angegeben.

Erfindungsgemäß weist ein modulares Aufbewahrungssystem für Labor-Flüssigkeiten einen Trägerrahmen sowie mindestens zwei verschiedene Laborgefäß-Einsätze auf, welche sich beliebig gegeneinander austauschbar und beliebig kombinierbar in den Trägerrahmen einsetzen lassen. Der Trägerrahmen weist zu diesem Zweck eine bestimmte Anzahl Steckplätze auf, die zum Formschluss mit den Laborgefäß-Einsätzen in ihrer Gestalt an diese Aufgabe angepasst sind. Die Laborgefäß-Einsätze weisen jeweils selbst direkt integriert mindestens ein Laborgefäß auf und/oder haben mindestens ein Steckfach für mindestens ein separates Laborgefäß. So können in dem erfindungsgemäßen Aufbewahrungssystem herkömmliche Laborgefäße ebenso untergebracht werden, wie zum Beispiel speziell für einen bestimmten Anwendungsfall in ihrem Volumen oder ihrer Geometrie angepasste. Und auch zukünftig auf dem Markt erscheinende Laborgefäße lassen sich in das Aufbewahrungssystem integrieren, indem dann dafür Laborgefäß-Einsätze mit einem entsprechend angepassten Steckfach konstruiert werden.

Das erfindungsgemäße Aufbewahrungssystem lässt sich leicht in die Arbeitsumgebung und Programmierung einer computergestützten Workstation für das Labor einbetten. Insbesondere ist es erfindungsgemäß vorteilhaft, dass die Integration einer Vielzahl von Laborbehältern chaotisch in die Aufnahmevorrichtung erfolgen kann, wobei sich die Behälter in Form, Durchmessergröße, Höhe, Material und Verschlussauslegung jeweils unterscheiden. Die hohe Interaktionsfähigkeit moderner Workstations wird durch die erfindungsgemäß selbsttätig mögliche Erkennung des Aufbewahrungssystems im Hinblick auf Position, Ausrichtung und Art der Systemkomponenten unterstützt. Proben können auf einer Solltemperatur gehalten werden, um zum Beispiel die Verdunstung der oft sehr kostbaren Substanzen zu erschweren und deren Haltbarkeit nicht zu beeinträchtigen. Deshalb ist es vorteilhaft möglich, eine Temperiereinrichtung in das Gesamtsystem zu integrieren.

Das Ziel der Erfindung ist eine Vorrichtung in Form eines vorzugsweise temperierbaren modularen Aufbewahrungssystems, welches auf einer kleinen Fläche die gleichzeitige Aufnahme verschiedenster Laborgefäße oder anderer Behälter in verschiedenster Form, Durchmesser und Höhe erlaubt. Die Gefäße können frei und unabhängig voneinander in das modulare Aufbewahrungssystem gebracht werden, sodass insgesamt der zur Verfügung stehende Raum optimal genutzt wird. Besonders in automatisierten Workstations im Laborbereich ist so der Zugriff auf extrem viele Gefäßtypen bei der gleichzeitigen Möglichkeit der Temperierung erreicht.

In vielen Laborprozessen ist die Aufbewahrung verbunden mit Kühlung, Aufheizung und Temperaturstabilisierung von Flüssigkeiten und anderen Stoffen unumgänglich. In vielen Fällen ist gleichzeitig eine große Anzahl unterschiedlichster Behälter für Proben auf kleinstmöglicher Fläche zu handhaben. Die Erfindung erlaubt endlich eine optimale Realisierung dieser Ziele. Der Begriff Behälter umfasst dabei alle im Labor verwendeten Gegenstände zur Aufnahme von festen oder flüssigen Stoffen.

In einer Workstation-integrierten Temperiereinrichtung, kann das erfindungsgemäß Aufbewahrungssystem angeordnet werden. Das Aufbewahrungssystem besteht aus einem Modulrack, welches vorzugsweise unterschiedliche Temperiermodule aufnimmt. Jedes Temperiermodul hat vorzugsweise eine Multifunktionseinsteckhilfe an seinem oberen Ende und nimmt die zu temperierenden Behälter auf. Vorzugsweise ist das Aufbewahrungssystem in Gänze oder in Teilen autoklavierfest.

Der Begriff Temperiermodul meint hier erfindungsgemäße Laborgefäß-Einsätze mit einem Körper aus wärmeleitendem Werkstoff, der das mindestens eine Laborgefäß des Einsatzes mindestens teilweise umgibt. Dieser Körper ist unterseitig vorzugsweise plan, und die Einsätze springen, in den Trägerrahmen eingesetzt, mit dem Körper unterseitig aus dem Rahmen so vor, dass sie gemeinsam eine, vorzugsweise plane, Unterseite bilden. Diese Unterseite bildet dann die Kontaktfläche für die Temperieroberfläche einer Temperiereinrichtung. Aber auch ein Zurückspringen der Modulunterseiten im Trägerahmen ist erfindungsgemäß denkbar, wenn die Temperiereinrichtung ihrerseits eine passende Temperieroberfläche hat. Bevorzugt ist besonders, dass die Module von der Temperieroberfläche der Temperiereinrichtung beim Einsetzen des Trägerrahmens in die Temperiereinrichtung leicht angehoben werden, um den Oberflächenkontakt der Temperieroberfläche mit der Unterseite der Module insbesondere durch deren Eigengewicht sicherzustellen.

Der Begriff Temperiereinrichtung umfasst dem entsprechend alle im Labor verwendeten Vorrichtungen mit planaren oder sonstigen Oberflächenformen zur Erreichung des erforderlichen thermischen Übergangs. Die Temperiereinrichtung kann vorzugsweise aus Aluminium, Silber, oder anderen Metallen oder Legierungen gefertigt sein. Alternative Materialien sind hochleitfähige Kunststoffe sowie Beschichtungsmaterialien zum Beispiel mit Nanopartikeln.

Durch die wahlfreie Anordnung der Temperiermodule im Modulrack können extrem viele verschiedenartige Behälter räumlich optimal aufgenommen werden. Über den thermischen Kontakt des Temperiermodules mit der Temperiereinrichtung werden durch Wärmeleitung die Proben in den Behältern auf eine gewünschte Temperatur oder einen Temperaturverlauf gebracht.

Die Temperiereinrichtung ist vorzugsweise in einer Workstation so eingebaut, dass mittels geeigneter zum Beispiel formschlüssiger Aufnahmevorrichtung das Aufbewahrungssystem oder Teile davon manuell oder durch eine dafür geeignete robotische Transporteinrichtung formschlüssig auf die Temperiereinrichtung gesetzt werden kann. Temperatur und Temperaturverlauf sind zum Beispiel durch die Steuerungseinheit der Workstation programmierbar.

Das Modulrack besteht bevorzugt aus einer quaderförmigen, aus einem Stück gefertigten, oben und unten offenen Halterung (Trägerrahmen). Alternativ sind auch mehrteilige Formen denkbar. Bevorzugt wird ein Format für die Grundfläche verwendet, welches mit dem Format einer oder mehrerer verbundener Mikroplatten (SBS) kompatibel ist. Veröffentlichte Standards für Microplates der Society for Biomelecular Screening (SBS) lauten zum Beispiel ANSI/SBS 1-2004, ANSI/SBS 2-2004,ANSI/SBS 3-2004,ANSI/SBS 4-2004. SBS befasst sich mit der Standardisierung von Mikroplatten, insbesondere um in der Laborautomation Entwicklungen zu erleichtern und dem Anwender größere Sicherheiten zu bieten.

Der der Temperiereinrichtung zugewandte Teil des Modulracks enthält vorzugsweise entsprechende Aufnahmeelemente zur Positionierung des Modulracks bezüglich der Temperiereinrichtung. Der obere Teil des Modulracks enthält vorzugsweise Einschnitte zur formschlüssigen und zentrierenden Aufnahme der Temperiermodule insbesondere mittels der Multifunktionseinsteckhilfen. Das Modulrack verfügt über Indizes zu dieser Erkennung seines Vorhandenseins in der Workstation und seiner Lage. In einer bevorzugten Ausführungsform dient in einer Workstation eine optische Leseeinrichtung mittels Laserdioden zur Erkennung. Es können aber auch andere Verfahren der Erkennung wie zum Beispiel Barcodes mit zugehörigem Scanner, mechanische Abtastsysteme, RFID-Tags mit Leser oder Verfahren der optischen Bildverarbeitung verwandt werden.

Die vorzugsweise aus hoch wärmeleitendem Material oder gut wärmespeicherndem Material gefertigten Temperiermodule können auf ihrer Oberseite die Multifunktionseinsteckhilfe aufweisen. Die kleineren Seiten der Multifunktionseinsteckhilfe verfügen vorzugsweise über Positionierstege zur formschlüssigen Fixierung mit dem Modulrack. Die Temperiermodule können vorzugsweise aus Aluminium, Silber, oder anderen Metallen oder Legierungen gefertigt sein. Alternative Materialien sind hochleitfähige Kunststoffe sowie Beschichtungsmaterialien z. B. mittels Nanopartikel.

Aber auch thermisch isolierende Laborgefäß-Einsätze können zu dem erfindungsgemäßen System gehören. Hier sind die Laborgefäße (oder die Steckfächer dafür) dann von einem isolierenden, thermisch gerade nicht hochleitfähigen Werkstoff-Körper umgeben.

Die Positionierstege sind vorzugsweise mit Indizes oder Codierungen ausgestattet, welche die Erkennung des jeweiligen Typs des Temperiermodules erlauben. In einer bevorzugten Ausführungsform dient in einer Workstation eine optische Leseeinrichtung mittels Laserdioden auch zu dieser Erkennung. Es können aber auch hier andere Verfahren der Erkennung wie zum Beispiel Barcodes mit zugehörigem Scanner, mechanische Abtastsysteme, RFID-Tags mit Leser oder Verfahren der optischen Bildverarbeitung verwandt werden. In einer bevorzugten Ausführungsform bilden die Indizes optisch abtastbare Elemente, bevorzugt in Form von Kreisen oder Rechtecken oder anderen Formen. Alternativ können erhöhte oder vertiefte Strukturen zur mechanischen Abtastung verwendet werden. Zur Vermeidung von Lesefehlern werden bevorzugt redundante Codierungen verwandt. In einer bevorzugten Ausführungsform führt das Fehlen einer Codierung ("Nullcodierung") zur Ausführung einer Unterbrechungsroutine im Programm der Workstation, welche zum Beispiel entsprechende Schritte zur Fehlerbehebung veranlasst.

In einer bevorzugten Ausführungsform erlaubt die Codierung auf einem der Positionierstege die richtungsorientierte Erkennung der Temperiermodule, um zum Beispiel die Vertauschung von Behältern auszuschließen. In einer anderen Ausführungsform zum Beispiel für Testtubes mit Filmscharnier-Deckel ist die Positionierhilfe mit einem Deckel-Fixiersteg versehen. Der Fixiersteg enthält Einstecköffnungen zum Offenhalten der Deckel der Testtubes, um ein definiertes Anfahren der Gefäßöffnungen insbesondere zum Beispiel mit Automatenpipetten nicht durch die Deckel zu behindern.

Vorzugsweise sind die einzelnen Temperiermodule so masse- und formoptimiert, dass eine schnellstmögliche homogene Temperaturverteilung erzielt wird. Unter Masseoptimierung werden im Laborbereich konstruktive Merkmale verstanden, welche in Summe den Nutzen aus Wärmetransport und Wärmekapazität optimieren. Die Formoptierung unterstützt diesen Prozess durch die entsprechende dreidimensionale Gestaltung.

Die Multifunktionseinsteckhilfe verfügt über Öffnungen zur Aufnahme von Behältern in das Temperiermodul. Die Aufnahmekavitäten des Temperiermoduls können je nach Gestalt des aufzunehmenden Gefäßes verschieden in Höhe, Durchmesser, Abstand und Gestalt sein. Sie können auch nach unten offen sein, um zum Beispiel einen Reinigungs- oder Spülvorgang zu unterstützen. Vorzugsweise sind die Höhen der Aufnahmekavitäten so bemessen, dass die eingebrachten Gefäße randbündig aus der Multifunktionshilfe ragen. In einer bevorzugten Ausführungsform können verschieden lange aufzunehmende Behälter mittels seitlich einsteckbarer unterer Anschläge oberseitig auf gleiche Höhe gebracht werden. Bevorzugt ist auch die Multifunktionseinsteckhilfe aus autoklaviergeeigneten Material gefertigt.

Eine alternative oder ergänzende Verwendung des Aufbewahrungssystems besteht in der Verwendung als unabhängiges Aufbewahrungssystem auch außerhalb einer Workstation, zum Beispiel in Kühl- oder Gefriereinheiten, Inkubationseinheiten, zum Zwischenlagern von Produkten der Molekularbiologie, wie zum Beispiel dem temporären Lagern von Amplifikationsprodukten oder - reagenzien vor, während oder nach einem PCR-Prozess, zum temporären Lagern von Proteinen oder Antibodies oder anderen Produkten, oder zum Transport von Behältern zwischen verschiedenen Workstations oder innerhalb derselben oder auch in Labor-Straßen.

Die Temperiereinrichtung für das System kann zusätzlich zur thermischen Funktion für das System mit weiteren Funktionen versehen sein, wie zum Beispiel mit Ergänzungsvorrichtungen zum Schütteln des Aufbewahrungssystems, um eine bessere Mischung der Proben in den Behältern sicherzustellen. Auch wird dadurch zum Beispiel die Auflösung von Feststoffen, wie zum Beispiel von Tabletten oder Material in Pulverform, unterstützt.

Das Modulrack kann anstelle von Temperiermodulen auch andere Module zur Prozessunterstützung im Labor aufnehmen, wie zum Beispiel Tanks für Flüssigkeiten oder Abfall. Andere bevorzugte Ausführungsformen der Laborgefäß-Einsätze oder Module sind zum Beispiel Vortex-Mischereinsätze für kleinere Laboraufgaben oder Einsätze für andere elektrische Kleingeräte zum Beispiel für Stofftrennung wie zum Beispiel für magnetische Beads in der Aufreinigung von DNA.

Die bevorzugte Ausführungsform des Modulracks und der damit zusammengehörigen Komponenten ist in Quaderform. Eine bevorzugte Ausführungsform ist unterseitig passgenau zum Mikrotiterplattenformat (SBS). Es können aber auch alle anderen Formate, wie zum Beispiel kreisrunde Formen, typischerweise ringförmige Strukturen oder Karussells, verwendet werden.

Eine bevorzugte Ausgestaltung der Erfindung wird im folgenden mit Bezug auf die beigefügten Zeichnungen beispielhaft beschrieben.
- **Figur 1**: ist eine räumliche Ansicht eines erfindungsgemäßen modularen Aufbewahrungssystems für Laborflüssigkeiten mit einem Trägerrahmen und sieben Laborgefäß-Einsätzen,
- **Figur 2**: ist eine räumliche Ansicht von neun verschiedenen Laborgefäß-Einsätzen zum Teil mit Laborgefäßen in jeweiligen Steckfächern,
- **Figur 3**: ist eine räumliche Ansicht einer Workstation, in welcher das erfindungsgemäße Aufbewahrungssystem (nicht abgebildet) einsetzbar ist,
- **Figur 4**: das erfindungsgemäße Aufbewahrungssystem gemäß Figur 1 in räumlicher Ansicht an einem Greifer einer Workstation gemäß Figur 3 und
- **Figur 5 bis 13**: jeweils oben in räumlicher Ansicht, unten links im Querschnitt und unten rechts in Seitenansicht die neun verschiedenen Laborgefäß-Einsätze gemäß Figur **2****.**

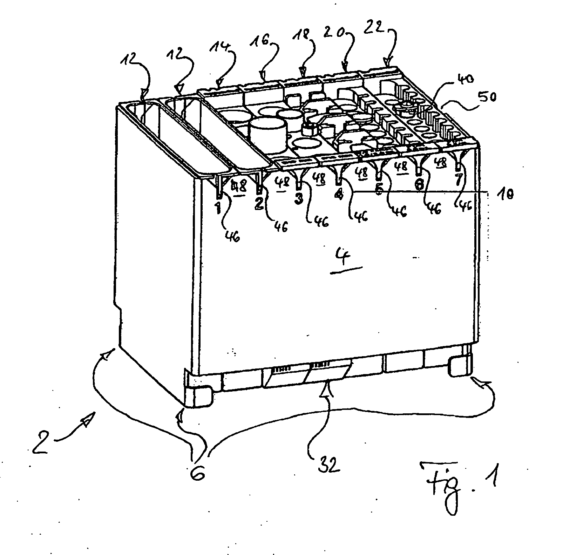

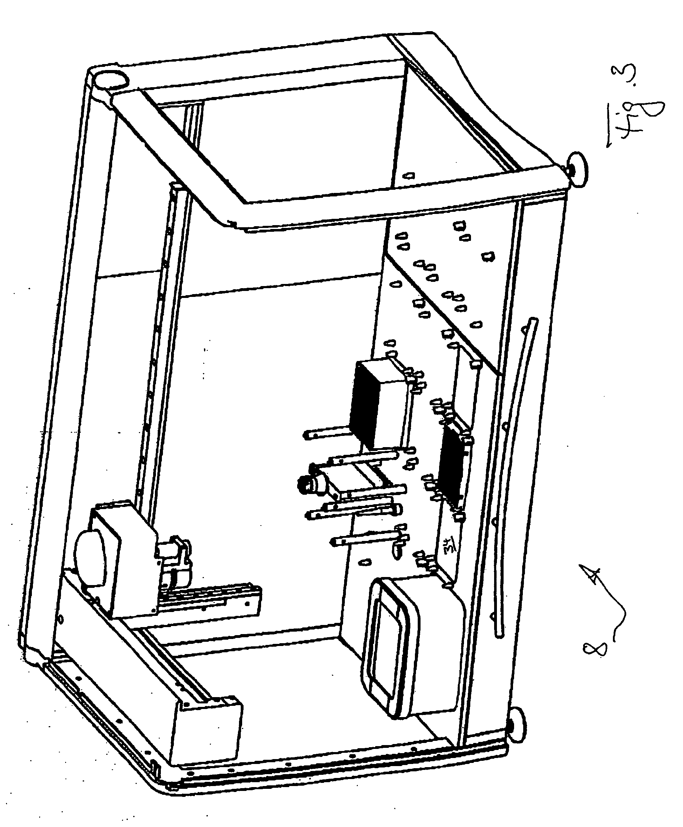

Figur 1 zeigt ein modulares Aufbewahrungssystem **2** für Labor-Flüssigkeiten (nicht dargestellt) mit einem Trägerrahmen **4,** der aus Blech gebogen ist. Der Trägerrahmen **4** weist unterseitig ein SBS-Standardformat einer Mikroplatte auf **(6).** Dadurch lässt sich der Trägerrahmen **4** in die verschiedenen Positionen zum Beispiel einer Workstation **8** (Figur 3), aber auch in andere für dieses Anschlussmaß vorgesehene Laborvorrichtungen formschlüssig einsetzen.

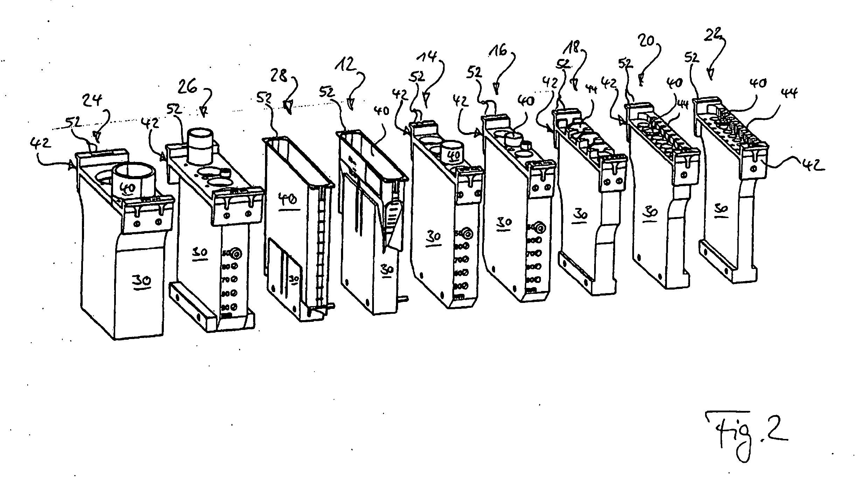

Der Trägerrahmen **4** wieder gemäß Figur 1 weist insgesamt sieben Steckplätze 10 für Laborgefäßeinsätze **12** bis **22** auf. Die Steckplätze **10** mit der Nummerierung 1 und 2 sind jeweils mit gleichen Laborgefäß-Einsätzen **12** in Gestalt einer niedrigen Wanne bestückt (siehe auch Figur 2), während die übrigen Steckplätze **10** mit der Nummerierung 3 bis 7 jeweils von Laborgefäß-Einsätzen für jeweils mindestens vier Laborgefäße bestückt sind.

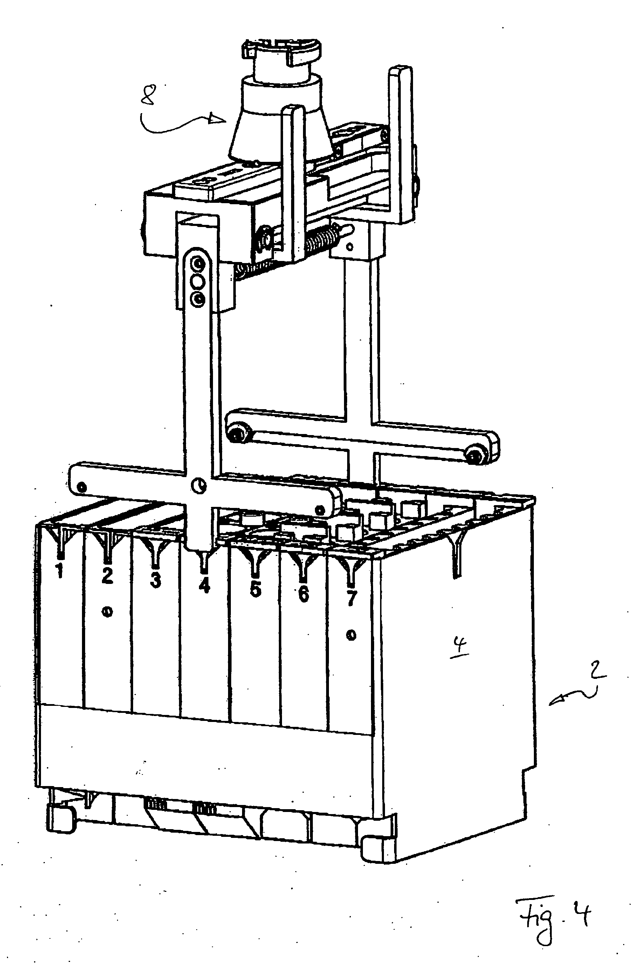

Für den Transport innerhalb der Workstation **8** weisen sowohl der Trägerrahmen **4** als auch jeweils die Laborgefäß-Einsätze **12** bis **28** Greifstrukturen auf, so dass der Trägerrahmen mit eingesetzten Laborgefäß-Einsätzen mittels eines robotischen Greifers **9** (Fig. 4) der Workstation **8** automatisch und/oder manuell umsetzbar ist und auch die Laborgefäß-Einsätze einzeln sich umsetzen, also dem Rahmen entnehmen und in ihn einsetzen lassen.

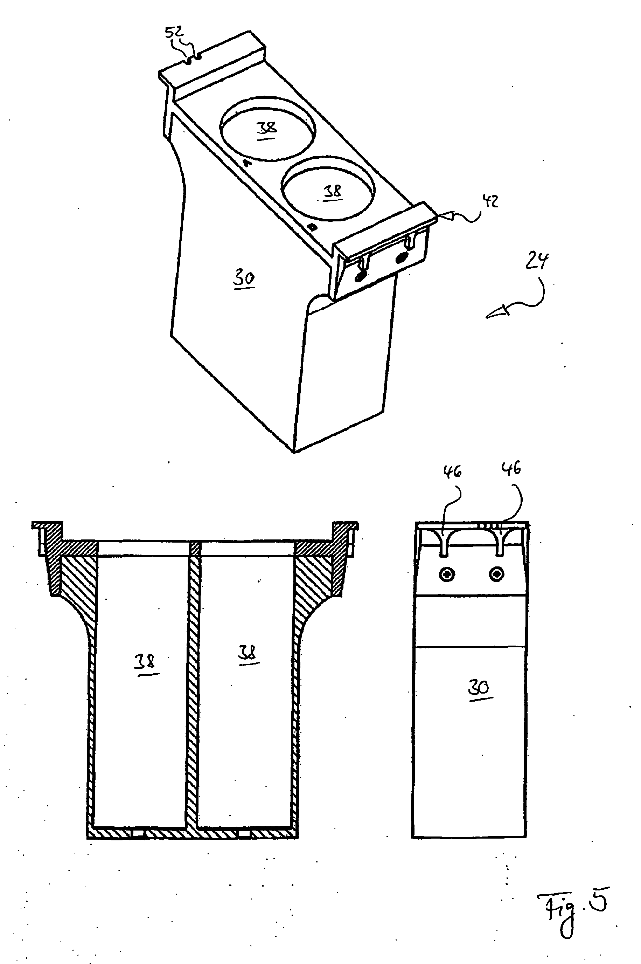

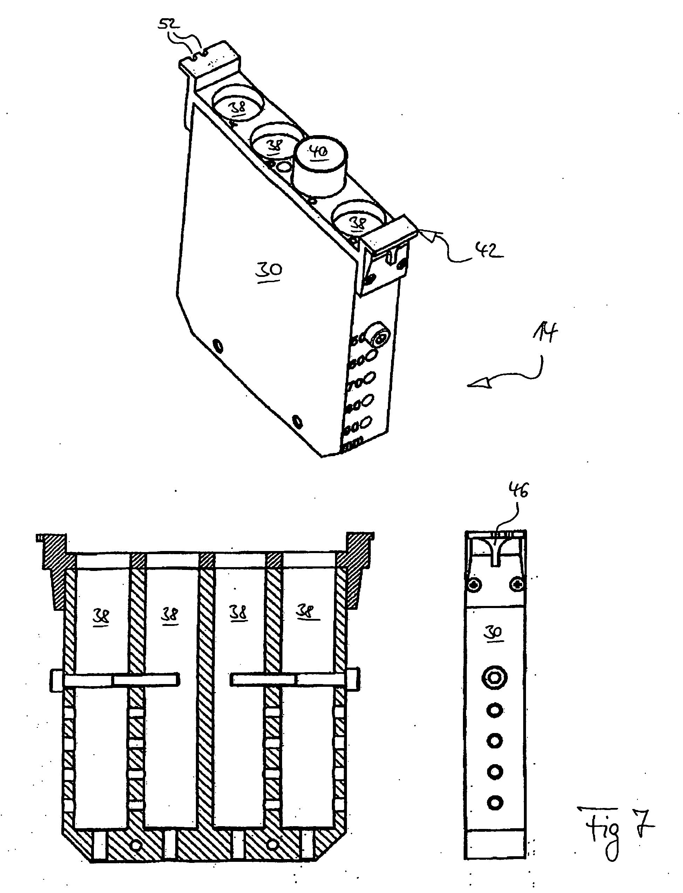

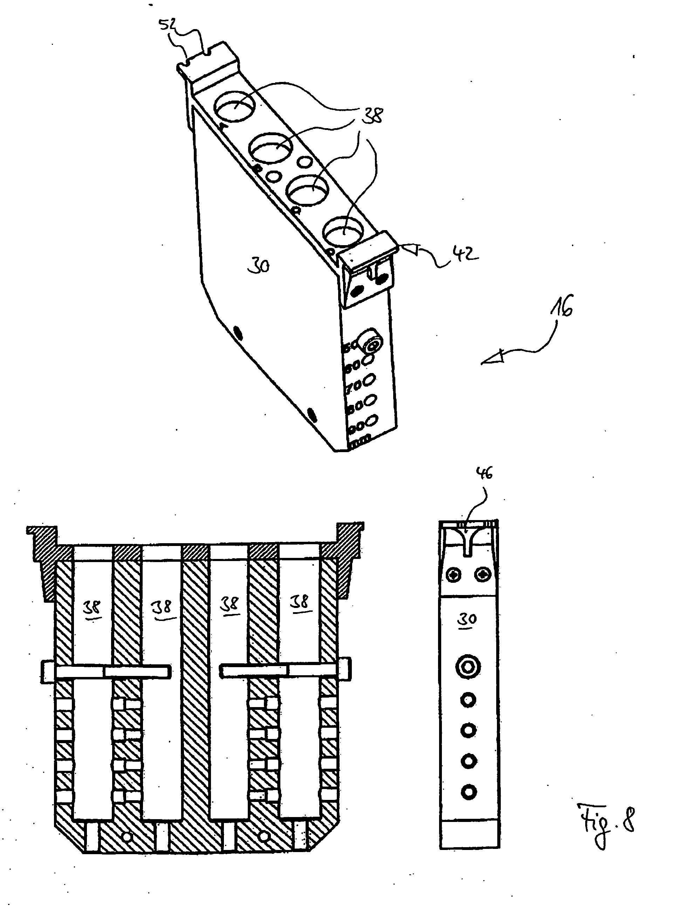

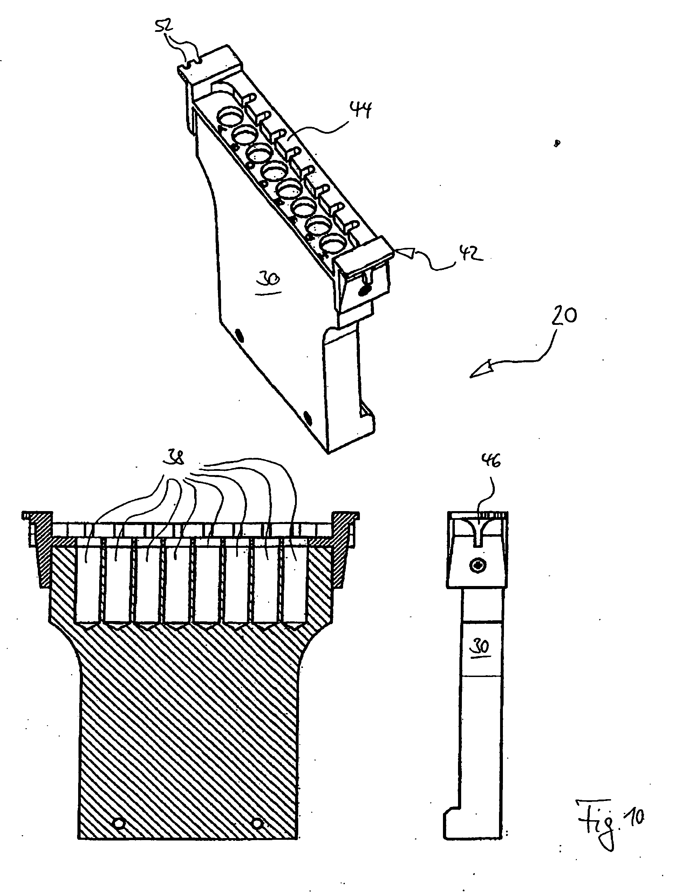

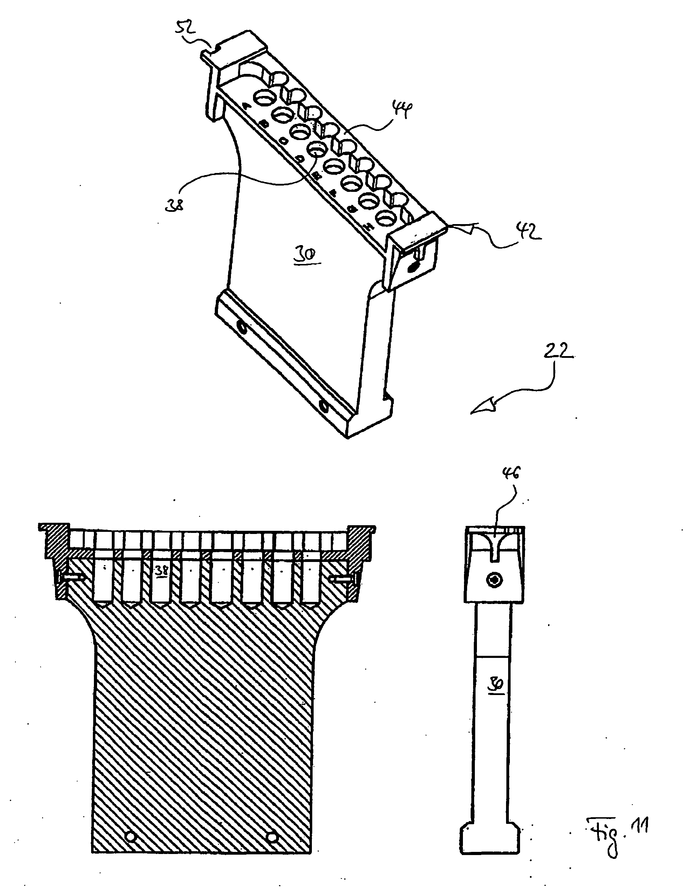

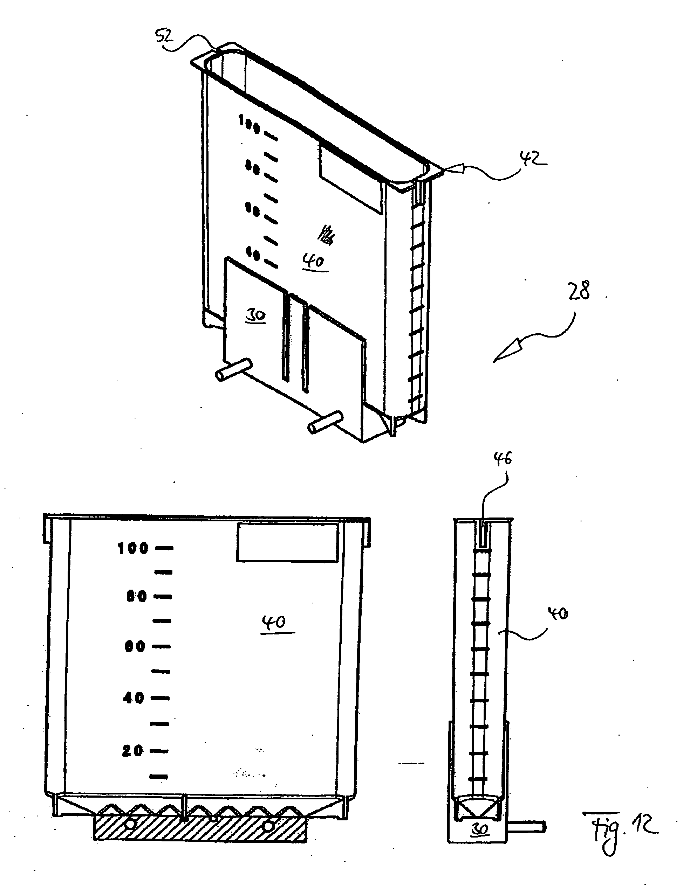

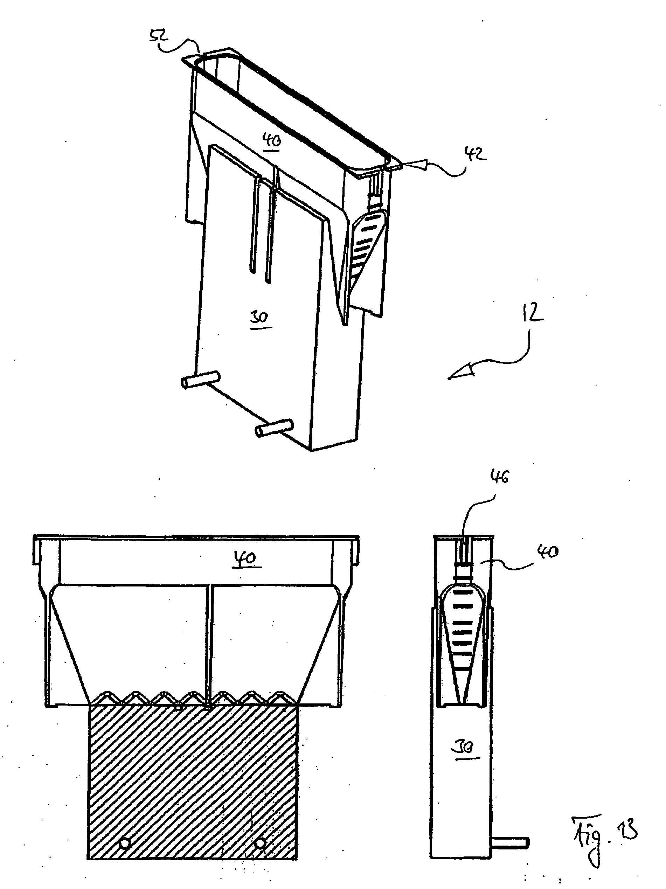

Die Laborgefäß-Einsätze **12** bis **22** in dem Trägerrahmen **4** gemäß Figur 1 sowie auch noch einige in Figur 1 nicht abgebildete Laborgefäß-Einsätze **24, 26** und **28** sind in Figur 2 sowie jeweils in drei Ansichten auch in Figur **5** bis **13** dargestellt. Erkennbar sind die Laborgefäß-Einsätze **12** bis **28** jeweils als Temperier-Module ausgebildet, indem sie jeweils einen Körper **30** aus Aluminium aufweisen, welcher für gleichmäßige Temperaturverteilung sorgt, wenn das Aufgewahrungssystem **2** gemäß Figur 1 mit seiner planen Unterseite **32** auf eine Temperiereinrichtung gesetzt wird, zum Beispiel auf die Temperiereinrichtung **34** der Workstation **8** gemäß Figur 3. Die Körper **30** der Einsätze **12** bis **28** aus wärmeleitendem Werkstoff umgeben die jeweiligen Gefäße (zum Teil nicht dargestellt) jedes der Einsätze **12** bis **28** mindestens teilweise und leiten so die Temperatur aus der Temperiereinrichtung **34** in die Flüssigkeit, die in dem jeweiligen Gefäß aufgenommen ist. Um die Temperatur gleichmäßig aus der Temperiereinrichtung **34** über die plane Unterseite **32** in die Gefäße einzuleiten, ist jeder der Körper **30** unterseitig plan, und die Einsätze ragen, in den Trägerrahmen **4** eingesetzt, jeweils mit dem Körper **30** unterseitig aus dem Rahmen **4** etwas hervor, so dass die Einsätze **12** bis **22** von der Temperieroberfläche der Temperiereinrichtung **34** etwas angehoben werden und durch ihr Eigengewicht den Temperierkontakt unterstützen. Wenn folglich der Rahmen **4** mit seinen unterseitigen Ecken 6 formschlüssig in die Temperiereinrichtung **34** und dort insbesondere auf die ebene Temperieroberfläche **34** aufgesetzt wird, kommen zunächst die ebenen Unterseiten **32** der Körper **30** der Einsätze **12** bis **28** mit der Temperieroberfläche **34** in Eingriff, bevor dann die Formschluss-Ecken **6** die gesamte Anordnung des Aufbewahrungssystems **2** in den entsprechenden Eckhalterungen der Temperiereinrichtung **34** formschlüssig sichern.

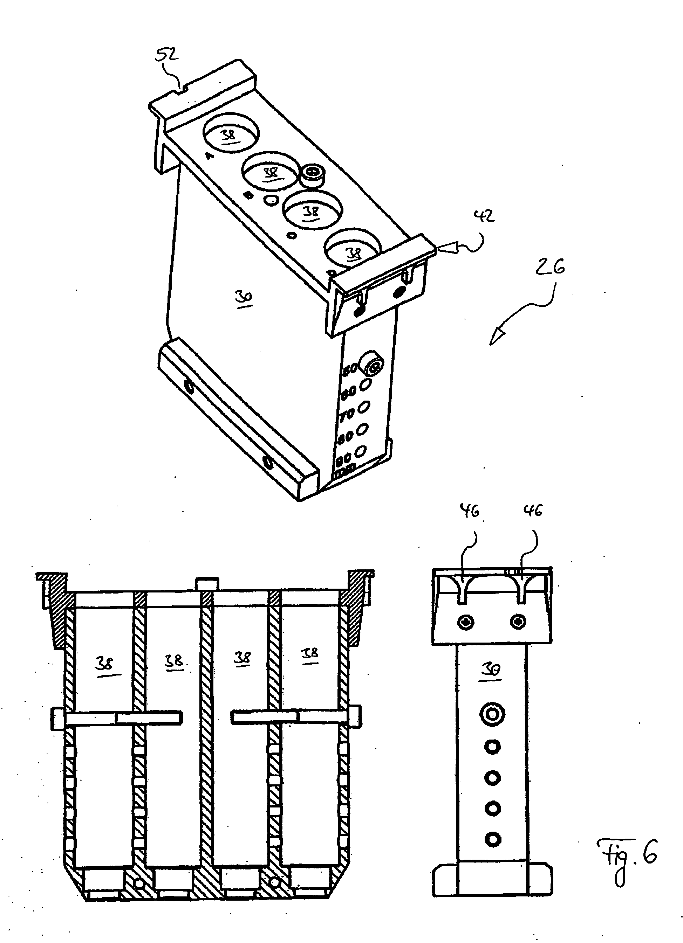

Wie gesagt enthält jeder der Laborgefäß-Einsätze **12** bis **28** gemäß Figur 2 mindestens ein Steckfach **38** für ein bestimmtes Laborgefäß **40:** Von links nach rechts in Figur 2 hat der Einsatz **24** (siehe auch Figur 5) zwei kreisrunde Steckfächer **38** für zylindrische großvolumige Gefäße. Eines von diesen Gefäßen **40** ist in Figur 2 im Einsatz **24** abgebildet. Die Einsätze **26, 14, 16** und **18** haben jeweils vier Steckfächer (siehe auch die Figuren 6 bis 9) ebenfalls für zylindrische Laborgefäße, allerdings schlankere als beim Einsatz **24.** Erkennbar erfordert ebenso wie der Einsatz **24** auch der Einsatz **26** wegen seines relativ großen Durchmessers der Steckfächer **38** eine verglichen mit den übrigen Einsätzen **12** bis **22** und 28 doppelte Breite des Einsatzes **24** und **26.** Die Einsätze **20** und **22** haben jeweils Steckfächer **38** für acht Laborgefäße, und zwar ebenfalls zylindrische, während schließlich die Einsätze **12** und **28** Steckfächer für eine niedrige **(12)** beziehungsweise eine hohe **(28)** Wanne **40** aufweisen. Insbesondere bei der hohen Wanne **40** des Einsatzes **28** ist es vorteilhaft, dass die Einsätze gemäß Figur 1 in dem Trägerrahmen **4** dicht an dicht in einer Reihe nebeneinander angeordnet sind, denn auf diese Weise wird der Wannenbehälter **40** eines Einsatzes **28** vom Temperierkörper **30** eines benachbarten Einsatzes mit erwärmt.

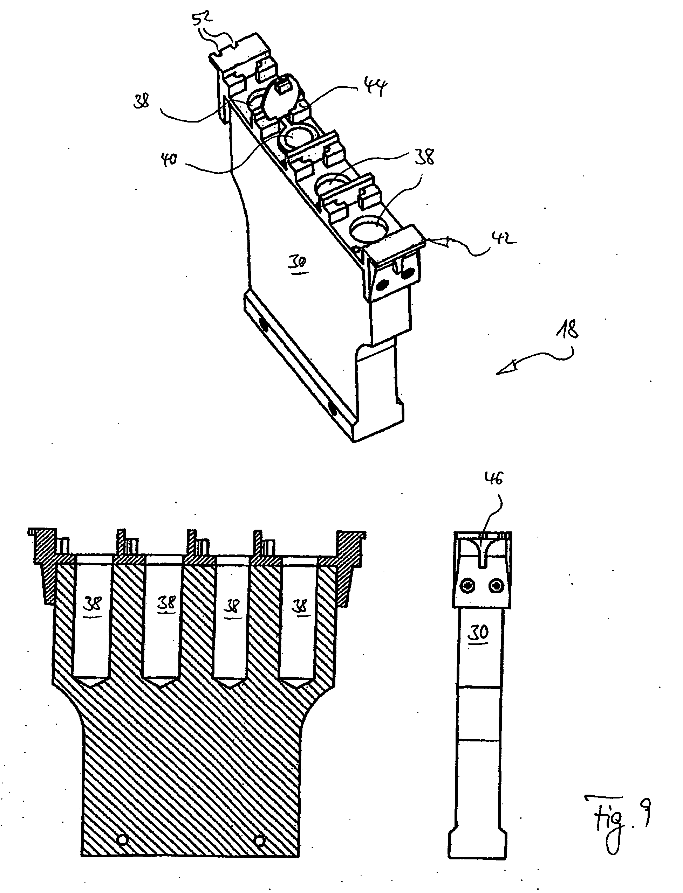

Einige der Einsätze **(18** bis **22)** weisen oberseitig an ihren Multifunktionseinsteckhilfen **42** Deckelfixierstege **44** auf, welche in der Lage sind, die Filmscharnier-Deckel zum Beispiel des Gefäßes **40** im Einsatz **22** in um 90° ausgeschwenkter (also senkrecht empor weisender) Deckelposition zu halten. In Figur 1 und 2 ist der Filmscharnierdeckel des Gefäßes **40** in dem Einsatz **22** geschlossen dargestellt, in Figur 9 (oben) ist der Filmscharnierdeckel des Gefäßes **40** in dem Einsatz **22** in der um 90° senkrecht empor weisenden Position durch den Deckelfixiersteg **44** geöffnet.

Jeder der Steckplätze **10** im Trägerrahmen **4** gemäß Figur 1 hat beidseitig im oberen Rand des Trägerrahmens **4** eine Y-förmige Kerbe, in der mindestens eine Positioniernase **46** des jeweiligen Einsatzes **12** bis **28** formschlüssig gehalten ist. Die Y-förmigen Kerben begrenzen seitlich Blechzungen **48** des oberen Randes des Trägerrahmen **4.** Die Blechzungen sind auf der dem Betrachter zugewandten Seite in Figur 1 nur so hoch wie die Y-förmigen Kerben **46,** während sie auf der gegenüberliegenden, vom Betrachter in Figur 1 abgewandten Seite (in Figur 1 von den Einsätzen **12** bis **22** verdeckt) durch senkrechte Schnitte in der Blechwand **4,** welche die Y-förmigen Kerben **46** nach unten verlängern, in ihrer Höhe zu federnden Zungen verlängert sind. Diese Federzungen (nicht abgebildet) klemmen jeden der Einsätze **12** bis **22** in Figur 1 auf den Betrachter zu gegen die Zungen **48** in der vorderen Wand des Trägerrahmens **4** - welche somit eine fluchtende Nulllinie bildet, um die jeweiligen Steckfächer der Einsätze **12** bis **22** hochgenau positionieren zu können.

Entlang einer der beiden Schmalseiten (in Figur 1 der rechten Schmalseite) weist der Trägerrahmen **4** eine weitere Y-förmige Kerbe **50** auf, die ein Verdrehen des Rahmens um 180° zum Beispiel in der formschlüssigen Halterung der Temperiereinrichtung **34** der Workstation **8** optisch detektierbar macht. Auch die Einsätze **12** bis **28** weisen auf einer der beiden Schmalseiten der jeweiligen Multifunktionseinsteckhilfe **42** Codierkerben **52** auf, welche die Art des jeweiligen Laborgefäß-Einsatzes durch ihre eindeutige Position eindeutig detektierbar machen. Auch kann ein geeigneter, zum Beispiel optischer Sensor an der Kerbe **52** erkennen, ob der Einsatz möglicherweise um 180° verdreht in den Trägerrahmen **4** eingesetzt ist.

## Patentansprüche

1. Modulares Aufbewahrungssystem für Labor-Flüssigkeiten, **dadurch gekennzeichnet, dass** ein Trägerrahmen eine bestimmte Anzahl Steckplätze für mindestens zwei verschiedene Laborgefäß-Einsätze aufweist, die sich beliebig gegeneinander austauschbar und beliebig kombinierbar formschlüssig in die Steckplätze des Trägerrahmens einsetzen lassen und die jeweils mindestens ein Laborgefäß und/oder mindestens ein Steckfach für mindestens ein Laborgefäß aufweisen, wobei das mindestens eine Steckfach ein Formelement aufweist, welches den Deckel eines hineingesteckten Laborgefäßes in einer offenen Position arretiert.

2. System nach Anspruch 1, **dadurch gekennzeichnet, dass** die Einsätze, in den Rahmen eingesetzt, die Gefäße in dem Rahmen in einem rechtwinkligen Feld anordnen.

3. System nach einem der vorhergehenden Ansprüche, **dadurch gekennzeichnet, dass** die Steckplätze in einer Reihe nebeneinander angeordnet sind.

4. System nach einem der vorhergehenden Ansprüche, **gekennzeichnet durch** mindestens ein Federelement, welches den Einsatz jeweils in einem Steckplatz geklemmt hält.

5. System nach dem vorhergehenden Anspruch, **dadurch gekennzeichnet, dass** das Federelement den Einsatz seitlich gegen eine durch alle Steckplätze fluchtende Nulllinie klemmt.

6. System nach einem der beiden vorhergehenden Ansprüche, **dadurch gekennzeichnet, dass** für jeden Steckplatz der Rahmen mindestens ein Federelement aufweist.

7. System nach einem der vorhergehenden Ansprüche, **dadurch gekennzeichnet, dass** die Einsätze um 180° verdrehbar in den Rahmen einsetzbar sind und dass der Rahmen und/oder die Einsätze eine Markierung aufweisen, die ein Verdrehen um 180° insbesondere optisch detektierbar macht.

8. System nach einem der vorhergehenden Ansprüche, **dadurch gekennzeichnet, dass** der Einsatz eine Codierung aufweist, die die Art und/oder überhaupt die Anwesenheit des Einsatzes und/oder des mindestens einen Laborgefäßes insbesondere optisch detektierbar macht.

9. System nach einem der vorhergehenden Ansprüche, **dadurch gekennzeichnet, dass** der Einsatz codierbar ist, so dass mindestens eine Eigenschaft des mindestens einen Laborgefäßes, insbesondere betreffend seinen Inhalt, insbesondere optisch detektierbar ist.

10. System nach einem der vorhergehenden Ansprüche, **dadurch gekennzeichnet, dass** die Einsätze einen Körper aus wärmeleitendem Werkstoff aufweisen, der das mindestens eine Gefäß mindestens teilweise umgibt.

11. System nach dem vorhergehenden Anspruch, **dadurch gekennzeichnet, dass** der Körper unterseitig plan ist und dass die Einsätze in den Rahmen eingesetzt mit ihren Körpern unterseitig gemeinsam eine plane Unterseite bilden.

12. System nach einem der vorhergehenden Ansprüche, **dadurch gekennzeichnet, dass** der Rahmen unterseitig das Standardformat SBS einer Mikroplatte aufweist.

13. System nach einem der vorhergehenden Ansprüche, **dadurch gekennzeichnet, dass** der Rahmen aus Blech gebogen ist und die Steckplätze umgibt.

14. System nach einem der vorhergehenden Ansprüche, **dadurch gekennzeichnet, dass** der Trägerrahmen mit eingesetzten Laborgefäß-Einsätzen und/oder die Laborgefäß-Einsätze einzeln mittels geeigneter Vorrichtungen, insbesondere mittels eines robotischen Greifers in einer Workstation automatisch und/oder manuell umsetzbar sind.

## Claims

1. A modular storage systems for laboratory fluids, **characterized in that** a support frame has a specific number of slots for at least two different laboratory vessel inserts which can be inserted arbitrarily interchangeable with each other and can be combined as a positive fit in the slots of the support frame and each having at least one laboratory vessel and at least one compartment for at least one laboratory vessel, wherein the at least one compartment has a shaped element that locks the cover of an inserted laboratory vessel in an open position.

2. The system according to claim 1, **characterized in that** the inserts inserted in the frame arrange the vessels in the frame in a rectangular field.

3. The system according to one of the prior claims, **characterized in that** the slots are arranged in a row side by side.

4. The system according to one of the prior claims, **characterized by** at least one spring element that clamps each insert in a slot.

5. A system according to one of the prior claims, **characterized in that** the spring element clamps the insert laterally against a zero line flush with all the slots.

6. The system according to one of the two prior claims, **characterized in that** the frame has at least one spring element for each slot.

7. A system according to one of the prior claims, **characterized in that** the inserts rotated by 180° are insertable in the frame, and the frame and/or the inserts have a mark that renders the 180° rotation in particular visually detectable.

8. The system according to one of the prior claims, **characterized in that** the insert has a code that renders the type and/or the presence of the insert in general and/or at least one laboratory vessel in particular visually detectable.

9. The system according to one of the prior claims, **characterized in that** the insert is encodable so that at least one characteristic of the at least one laboratory vessel, in particular relating to its content, is in particular visually detectable.

10. The system according to one of the prior claims, **characterized in that** the inserts have a body consisting of thermally conductive material that at least partially surrounds the at least one vessel.

11. The system according to the prior claim, **characterized in that** the bottom side of the body is flat, and that the bodies of the inserts inserted in the frame jointly form with their bottom sides a flat bottom.

12. The system according to one of the prior claims, **characterized in that** the bottom of the frame has standard SBS format of a microplate.

13. The system according to one of the prior claims, **characterized in that** the frame is made of bent sheet metal and surrounds the slots.

14. A system according to one of the prior claims, **characterized in that** the support frame with inserted laboratory vessel inserts and/or the individual laboratory inserts can be automatically or manually moved in a workstation using suitable devices, especially by means of a robotic gripper.

## Revendications

1. Système de conservation modulaire pour liquides de laboratoire, **caractérisé en ce qu'**un châssis-support comprend un nombre défini d'emplacements pour au moins deux inserts de récipients de laboratoire différents qui sont interchangeables de manière quelconque et peuvent être insérés au choix en les combinant par complémentarité de forme dans les emplacements du châssis-support, et qui comprennent au moins un récipient de laboratoire et/ou au moins un compartiment insérable pour au moins un récipient de laboratoire, ledit au moins un compartiment insérable présentant un élément profilé qui bloque dans une position ouverte le couvercle d'un récipient de laboratoire enfoncé.

2. Système selon la revendication 1, **caractérisé en ce que** les inserts ajustés dans le châssis disposent les récipients dans le châssis dans un champ à angles droits.

3. Système selon une des revendications précédentes, **caractérisé en ce que** les emplacements sont agencés dans une rangée les uns à côté des autres.

4. Système selon une des revendications précédentes, **caractérisé par** au moins un élément de ressort qui maintient l'insert bloqué dans un emplacement respectif.

5. Système selon la revendication précédente, **caractérisé en ce que** l'élément de ressort bloque l'insert latéralement contre une ligne de référence qui est alignée sur tous les emplacements.

6. Système selon une des deux revendications précédentes, **caractérisé en ce que** le châssis-support présente pour chaque emplacement au moins un élément de ressort.

7. Système selon une des revendications précédentes, **caractérisé en ce que** les inserts sont ajustables de façon rotative dans le châssis à 180°, et **en ce que** le châssis et/ou les inserts présentent un marquage qui permet de détecter une rotation à 180° en particulier visuellement.

8. Système selon une des revendications précédentes, **caractérisé en ce que** l'insert présente un codage qui permet de détecter, en particulier visuellement, le type et/ou surtout la présence de l'insert et/ou dudit au moins un récipient de laboratoire.

9. Système selon une des revendications précédentes, **caractérisé en ce que** l'insert peut être codé, de telle sorte qu'au moins une propriété d'au moins un récipient de laboratoire, en particulier du point de vue de son contenu, peut être détectée en particulier visuellement.

10. Système selon une des revendications précédentes, **caractérisé en ce que** les inserts présentent un corps en matériau thermoconducteur qui entoure au moins partiellement ledit au moins un récipient.

11. Système selon la revendication précédente, **caractérisé en ce que** le corps est plan sur sa face inférieure et **en ce que** les inserts ajustés dans le châssis forment ensemble avec leurs corps sur la face inférieure une face inférieure plane.

12. Système selon une des revendications précédentes, **caractérisé en ce que** le châssis présente sur sa face inférieure le format standard SBS d'une microplaque.

13. Système selon une des revendications précédentes, **caractérisé en ce que** le châssis est cintré en tôle et entoure les emplacements.

14. Système selon une des revendications précédentes, **caractérisé en ce que** le châssis-support avec des inserts de récipients de laboratoire ajustés et/ou les inserts de récipients de laboratoire peuvent être déplacés automatiquement et/ou manuellement individuellement au moyen de dispositifs appropriés, en particulier au moyen d'une pince robotisée, dans une station de travail.
